# EUROPEAN PATENT APPLICATION

(11) **EP 4 152 685 A1**
(43) Date of publication of application: **22.03.2023**
(21) Application number: 22188583.3
(22) Date of filing: 03.08.2022
(51) Int. Cl.: H04L 9/30, H04L 9/00, H04L 9/08, G06F 17/14

(54) **SIDE-CHANNEL ROBUST INCOMPLETE NUMBER THEORETIC TRANSFORM FOR CRYSTAL KYBER**

(30) Priority: 21.09.2021 US 202117480413
(71) Applicant: INTEL Corporation, Santa Clara, CA 95054 (US)
(72) Inventor: VARNA, Avinash L., Chandler, 85224 (US); SASTRY, Manoj, Portland, 97229 (US); GHOSH, Santosh, Hillsboro, 97124 (US); DINU, Dumitru-Daniel, Chandler, 85226 (US); BASSO, Andrea, London, W6 7QQ (GB)
(74) Representative: Maiwald GmbH

(57) **Abstract**

An apparatus comprises an input register comprising an input polynomial, a processing datapath communicatively coupled to the input register comprising a plurality of compute nodes to perform an incomplete number theoretic transform (NTT) algorithm on the input polynomial to generate an output polynomial in NTT format, the plurality of compute nodes comprising at least a first NTT circuit comprising a single butterfly circuit to perform a series of butterfly calculations on input data; and a randomizing circuitry to randomize an order of the series of butterfly calculations.

## Description

### BACKGROUND

Subject matter described herein relates generally to the field of computer security and more particularly to post-quantum cryptography.

Crystal-Kyber is a digital key encapsulation mechanism (KEM) based on the difficulty of lattice problems over module lattices that is secure under chosen message attacks. Crystal-Kyber relies in part on a polynomial multiplication using a secret polynomial, which raises the potential for side channel attacks to obtain secret information used in the signature scheme. Accordingly, techniques to protect Crystal-Kyber operations from side channel snooping attacks may find utility, e.g., in computer-based communication systems and methods.

### BRIEF DESCRIPTION OF THE DRAWINGS

The detailed description is described with reference to the accompanying figures.
Fig. 1 is a schematic illustration of a signing device and a verifying device, in accordance with embodiments.
Fig. 2 is a schematic illustration of an incomplete number theoretic transform (NTT), in accordance with embodiments.
Fig. 3 is a schematic illustration of paired coefficient-wise multiplication, in accordance with embodiments.
Fig. 4 is a schematic illustration of components to implement an incomplete number theoretic transform (NTT) calculation, in accordance with embodiments.
Fig. 5 is a schematic illustration of a processing structure to implement a number theoretic transform (NTT), in accordance with embodiments
Fig. 6 is a schematic illustration of a computing architecture which may be adapted to implement hardware acceleration in accordance with some examples.

### DETAILED DESCRIPTION

Described herein are exemplary systems and methods to implement low overheard side channel protection for number theoretic transform (NTT) operations. In the following description, numerous specific details are set forth to provide a thorough understanding of various examples. However, it will be understood by those skilled in the art that the various examples may be practiced without the specific details. In other instances, well-known methods, procedures, components, and circuits have not been illustrated or described in detail so as not to obscure the examples.

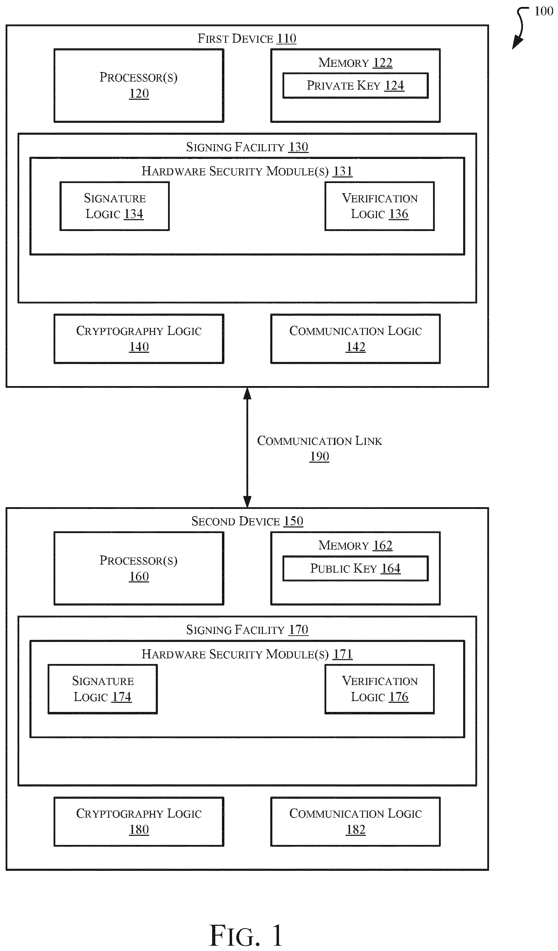

Fig. 1 is a schematic illustration of a high-level architecture of a secure environment 100 that includes a first device 110 and a second device 150, in accordance with some examples. Referring to Fig. 1, each of the first device 110 and the second device 150 may be embodied as any type of computing device capable of performing the functions described herein. For example, in some embodiments, each of the first device 110 and the second device 150 may be embodied as a laptop computer, tablet computer, notebook, netbook, Ultrabook^{™}, a smartphone, cellular phone, wearable computing device, personal digital assistant, mobile Internet device, desktop computer, router, server, workstation, and/or any other computing/communication device.

First device 110 includes one or more processor(s) 120 and a memory 122 to store a private key 124. The processor(s) 120 may be embodied as any type of processor capable of performing the functions described herein. For example, the processor(s) 120 may be embodied as a single or multi-core processor(s), digital signal processor, microcontroller, or other processor or processing/controlling circuit. Similarly, the memory 122 may be embodied as any type of volatile or non-volatile memory or data storage capable of performing the functions described herein. In operation, the memory 122 may store various data and software used during operation of the first device 110 such as operating systems, applications, programs, libraries, and drivers. The memory 122 is communicatively coupled to the processor(s) 120. In some examples the private key 124 may reside in a secure memory that may be part memory 122 or may be separate from memory 122.

First device 110 further comprises a signing facility 130 which comprises one or more hardware security module(s) 131 which includes memory 122, signature logic 134, and verification logic 136. Signature logic 132 may be configured to generate a signature to be transmitted, i.e., a transmitted signature and/or to verify a signature.

Cryptography logic 140 is configured to perform various cryptographic and/or security functions on behalf of the signing device 110. In some embodiments, the cryptography logic 140 may be embodied as a cryptographic engine, an independent security co-processor of the signing device 110, a cryptographic accelerator incorporated into the processor(s) 120, or a standalone software/firmware. In some embodiments, the cryptography logic 140 may generate and/or utilize various cryptographic keys (e.g., symmetric/asymmetric cryptographic keys) to facilitate encryption, decryption, signing, and/or signature verification. Additionally, in some embodiments, the cryptography logic 140 may facilitate to establish a secure connection with remote devices over communication link. It should further be appreciated that, in some embodiments, the cryptography module 140 and/or another module of the first device 110 may establish a trusted execution environment or secure enclave within which a portion of the data described herein may be stored and/or a number of the functions described herein may be performed.

After a signature is generate, the message, M, and signature may then be sent by first device 110, e.g., via communication logic 142, to second device 150 via network communication link 190. In an embodiment, the message, M, may not be encrypted prior to transmission. In another embodiment, the message, M, may be encrypted prior to transmission. For example, the message, M, may be encrypted by cryptography logic 140 to produce an encrypted message.

Second device 150 may also include one or more processors 160 and a memory 162 to store a public key 164. As described above, the processor(s) 160 may be embodied as any type of processor capable of performing the functions described herein. For example, the processor(s) 160 may be embodied as a single or multi-core processor(s), digital signal processor, microcontroller, or other processor or processing/controlling circuit. Similarly, the memory 162 may be embodied as any type of volatile or non-volatile memory or data storage capable of performing the functions described herein. In operation, the memory 162 may store various data and software used during operation of the second device 150 such as operating systems, applications, programs, libraries, and drivers. The memory 162 is communicatively coupled to the processor(s) 160.

Second device 150 further comprises a signing facility 170 comprising one or more hardware security module 171 which includes signature logic 174 and verification logic 176. In instances in which the second device is the verifying device, hardware security module 171 is configured to generate a verification signature based, at least in part, on the signature received from the first device and based, at least in part, on the received message representative (m').

The various modules of the environment 100 may be embodied as hardware, software, firmware, or a combination thereof. For example, the various modules, logic, and other components of the environment 100 may form a portion of, or otherwise be established by, the processor(s) 120 of first device 110 or processor(s) 160 of second device 150, or other hardware components of the devices As such, in some embodiments, one or more of the modules of the environment 100 may be embodied as circuitry or collection of electrical devices (e.g., an authentication circuitry, a cryptography circuitry, a communication circuitry, a signature circuitry, and/or a verification circuitry). Additionally, in some embodiments, one or more of the illustrative modules may form a portion of another module and/or one or more of the illustrative modules may be independent of one another.

As described briefly above, existing public-key digital signature algorithms such as Rivest-Shamir-Adleman (RSA) and Elliptic Curve Digital Signature Algorithm (ECDSA) are anticipated not to be secure against brute-force attacks based on algorithms such as Shor's algorithm using quantum computers. Lattice-based signature algorithms, on the other hand, are expected to withstand attacks by quantum computers. One example of lattice-based key encapsulation mechanism (KEM) is the Kyber scheme.

A Kyber key encapsulation mechanism (KEM) process relies on multiple polynomial multiplication operations that utilize a secret polynomial, which raises the opportunity for side-channel snooping attacks to obtain secret information about the operations. Masking is one technique used to protect against side-channel leakages. However, masking incurs a significant performance overhead, with the computation times of masked implementations being more than twice the computation time of unmasked implementations. Shuffling techniques cannot be straightforwardly applied to Crystal-Kyber calculations because Kyber uses a different NTT approach that reduces the number of operations that can be shuffled. Further, direct applications of shuffling to Kyber does not guarantee enough security.

Described herein are systems and methods to address these and other issues. Some examples implement a shuffling-based solution that achieves workable trade-offs between security, performance, and silicon area consumption. One approach reorders operations in the NTT calculation to increase the amount of randomizable operations (and thus increase security), while also rearranging the memory structure to guarantee good performance.

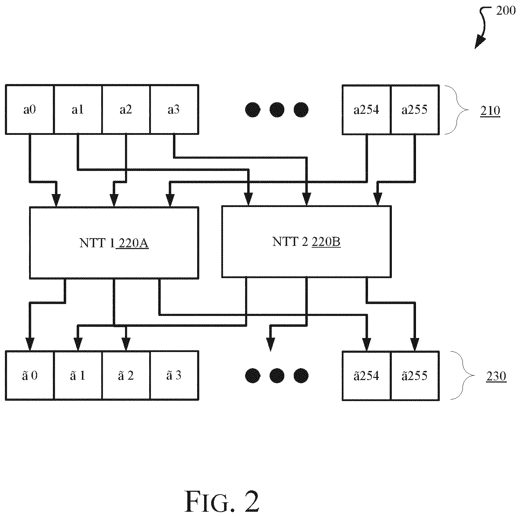

More particularly, polynomial multiplication in Kyber may be computed using the number theoretic transform (NTT) algorithm. Fig. 2 is a schematic illustration of an incomplete number theoretic transform (NTT) 200, in accordance with embodiments The NTT algorithm transforms a polynomial a(x) 210 into its NTT form ã(x) 230. This requires the NTT modulus to contain 512^{th} root of unity (512 = 2 x 256, with 256 being the number of coefficients in each Kyber polynomial). To speed up computations, some implementations of Kyber use a smaller modulus that only has a 256^{th} root of unity. Thus, Kyber relies on an incomplete NTT. This means the NTT works independently on the even and the odd-indexed coefficients and that the result is partial. While the basic operations are similar to the complete NTT used in other protocols, the incomplete NTT is significantly different in its execution and requires substantial changes in both its implementation and its protection.

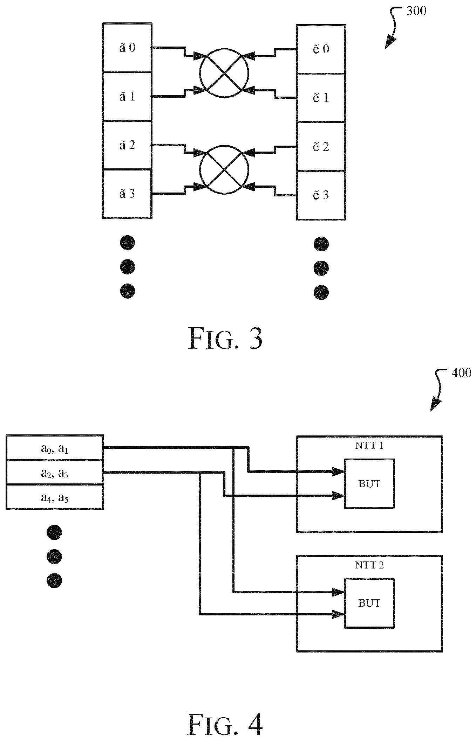

Fig. 3 is a schematic illustration of paired coefficient-wise multiplication 300, in accordance with embodiments. Referring to Fig. 3, multiplication between polynomials in the incomplete-NTT form corresponds to many degree-1 polynomial multiplications. Each degree-1 polynomial is made with 2 coefficients represented in the incomplete-NTT form. Thus, it is possible to compute the product between a(x) and b(x) as INTT(NTT(a(x)) . NTT(b(x))), where INTT denotes the inverse NTT (i.e. INTT(NTT(a)) = a) and the "." denotes the paired-up degree-1 polynomial-wise multiplications. This means that if a(x) = a₀ + a₁x + a₂x² + a₃x³+ ... and b(x) = b₀ + b₁x + b₂x² + b₃x³+ ..., the first two coefficients of a.b are the coefficients of (ao + aix)(bo + bix), the third and fourth are (a₂ + a₃x)(b₂ + b₃x), etc.

A key element of the NTT algorithm is the butterfly operation. This operation receives two coefficients and one constant value and outputs the new values of the coefficients. Implementation of the butterfly operation follows the Cooley-Tukey (CT) algorithm for the forward NTT and Gentleman-Sande (GS) algorithm for the inverse NTT. That is possible because the inverse NTT algorithm is very similar to the forward NTT one, with the main difference being the butterfly operation. The NTT operates on all coefficients of one polynomial multiple times. After seven repetitions (since Kyber computes 2 incomplete-NTTs on even and odd-indexed 128 coefficients) of the 64 butterfly operations on 128 coefficients (with different pairs at each repetition), the NTT result is produced. Thus, one NTT function in Kyber consists of seven blocks of 64/n (where n is the number of butterfly units) cycles, where each cycle in a block contains independent operations, i.e. the result of one operation does not depend on the result of any other computation in the same block.

It is possible to protect implementations against side-channel attacks by randomizing the side-channel leakages. A technique referred to as shuffling comprises reordering in random order different operations. However, common implementations of the NTT use two butterfly circuits (n = 2) in parallel to perform the butterfly calculations. This means that only up to 32 operations can be reordered, and thus the number of possible power traces is 32!, which is roughly 2¹²⁰, which might be insufficient to protect against side channel attacks.

Fig. 4 is a schematic illustration of components 400 to implement an incomplete number theoretic transform (NTT) calculation, in accordance with embodiments. In accordance with embodiments described herein, an incomplete NTT circuit may be implemented using only a single butterfly operation (n = 1) per NTT circuit. In this way, it is possible to randomize 64 operations per butterfly circuit, which gives 64! possible side-channel traces, thereby providing sufficient security to guard against side-channel attacks. This approach, however, increases the computation latency, which can have a material impact on the overall performance

The Kyber algorithm uses several polynomials. During the encryption procedure, 2k forward NTTs and 2(k+1) inverse NTTs are computed, where k ranges between 2 and 4 depending on the security level. The 2x coefficient derives from the fact that each 256-coefficient polynomial corresponds to two 128-coefficient polynomials. To address the performance issues described above, two one-butterfly NTT computations may be computed in parallel. Since the most expensive components in terms of area consumption of the NTT circuit are the butterfly units, two one-butterfly NTT requires little more area than a single two-butterfly NTT. Since the number of forward and inverse NTTs is always a multiple of 2, two NTTs used in parallel are fully utilized and thus the latency is the same as using a single two-butterfly NTT.

While this approach is effective at guaranteeing a reduced area and latency overhead, it does impose requirements in terms of memory. Most memories are limited to one read port and one write port, and since each butterfly operation requires two coefficients at least two memory blocks are needed. However, it is possible to maintain the memory usage to two blocks when using a two-butterfly NTT by storing two coefficients of the same polynomial in the same memory word and by reading four coefficients at a time and writing them back to memory in a changed order. The same optimization is not feasible when using only one butterfly circuit. Thus, a straightforward approach of this technique would require twice as many memory blocks.

In embodiments described herein this issue may be addressed by storing two coefficients for different NTT circuits in the same memory word, as illustrated in Fig. 4. In this way, the required number of reading and writing operations is halved and thus only two memory blocks are needed. This arrangement has additional benefits. Firstly, it ties up the behavior of the two parallel NTTs in such a way that the same finite-state machine can be used to control both circuits. Hence, there area consumption of this solution is virtually the same as that of a single two-butterfly NTT circuit. Secondly, since the two NTT circuits are operating on the even and odd indexed coefficients of the same polynomial, this corresponds to saving consecutive coefficients in the same memory word, e.g. a₀ and a₁ can be stored the first word, with ao being used by one butterfly and a₁ by the other. This further simplifies both the reading procedure because no filtering is needed to select the correct coefficients, and the polynomial generation procedure, because the coefficients can just be saved in order. Thirdly, the coefficients are already stored in the correct order for the "coefficient-wise" multiplication that follows the NTT operation for coefficient-wise multiplication of the degree 2 polynomial, as explained above. Moreover, the multipliers within the NTT butterfly cores are often used to perform such multiplication operations. This approach does not affect that in any way since different NTT circuits can operate on different parts of the same polynomial because each operation only affects two coefficients. Hence, even for this potential application of the NTT, the overhead is zero.

This approach thereby enables the implementation of shuffling to protect polynomial multiplication in Kyber against side-channel attacks, which is a critical component that is often the main target of side-channel attacks. Advantageously, these countermeasures have virtually no overhead in terms of latency, area consumption, memory requirements or any other metrics, while guaranteeing a high level of security.

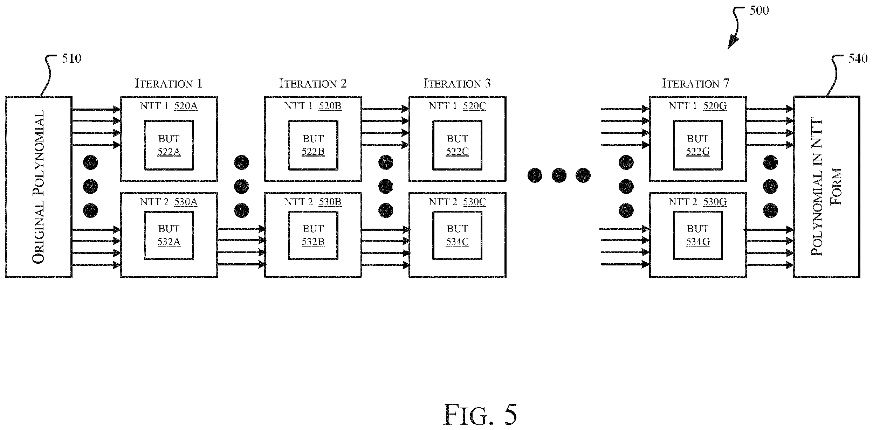

Fig. 5 is a schematic illustration of a processing datapath 500 to implement an incomplete number theoretic transform (NTT), in accordance with embodiments. Referring to Fig. 5, the datapath 500 comprises an input register 510 to receive an original input polynomial. Datapath 500 further comprises a plurality of compute nodes including a first set of compute nodes indicated in the drawing by 520A, 520B, 5200C, ... 520G connected in series and a second set of compute nodes indicated in the drawing by 530A, 530B, 530C, ... 530G. As described above, in one embodiment the each set of compute nodes comprises seven compute nodes, which may be referred to collectively by reference numeral 520 and 530. Each compute node 520, 530 in the pipeline 500 comprises at least a first NTT circuit which comprises a single butterfly circuit to perform a series of butterfly calculations. In one embodiment each compute node in the first set of compute nodes comprises a single butterfly circuit 522A, 522B, 522C, ... 522G and each compute node in the second set of compute nodes comprises a single butterfly circuit 534A, 534B, 534C, ... 534G. These butterfly circuits may be referred to collectively herein by reference numerals 522 and 524. Datapath 500 further comprises an output register 540 to receive the polynomial in NTT format.

In some examples the datapath 500 may be protected against side-channel attacks by randomizing operations which can give rise to side-channel leakages. One technique for accomplishing this is referred to as shuffling, which consists of reordering in random order different operations. Several algorithms exist to generate a random shuffle, with the Fisher-Yates algorithm being one of the most secure.

In some examples described herein the order of the 64 computations within each butterfly circuit 222, 224 of the datapath 200 may be randomized. This leads to 64! (approximately 2²⁹⁵) different configurations, and hence 64! different power/EM traces. This can be achieved by changing the way that the state is updated within a finite-state machine. In order to compute a permutation of 64 elements, we use an inside-out version of the Fisher-Yates algorithm, which requires 64 random numbers in a varying interval between 1 and 64, i.e., 64 random numbers are required, where the i-th number is uniformly random in the interval {0, ..., i-1}.

In some embodiments a shuffle may be implemented directly in hardware, rather than having a shuffle passed by an external party as an input. This gives additional security because an attacker can neither tamper with the process, nor generate a specific shuffle (or disable the shuffling altogether) that can be used to train a machine-learning model to build an attack.

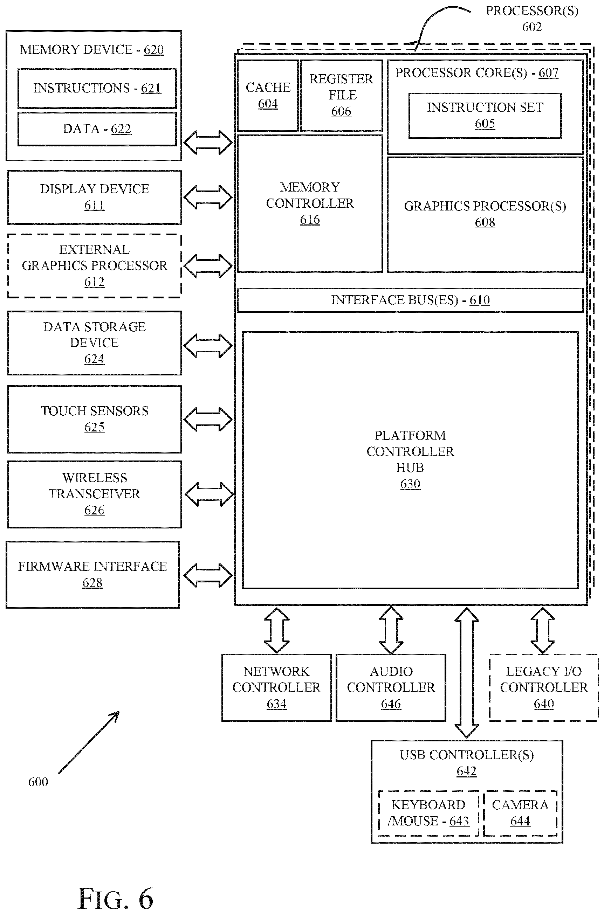

Fig. 6 illustrates an embodiment of an exemplary computing architecture that may be suitable for implementing various embodiments as previously described. In various embodiments, the computing architecture 600 may comprise or be implemented as part of an electronic device. In some embodiments, the computing architecture 600 may be representative, for example of a computer system that implements one or more components of the operating environments described above. In some embodiments, computing architecture 600 may be representative of one or more portions or components of a digital signature signing system that implement one or more techniques described herein. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 600. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 600 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 600.

As shown in Figure 6, the computing architecture 600 includes one or more processors 602 and one or more graphics processors 608, and may be a single processor desktop system, a multiprocessor workstation system, or a server system having a large number of processors 602 or processor cores 607. In on embodiment, the system 600 is a processing platform incorporated within a system-on-a-chip (SoC or SOC) integrated circuit for use in mobile, handheld, or embedded devices.

An embodiment of system 600 can include, or be incorporated within a server-based gaming platform, a game console, including a game and media console, a mobile gaming console, a handheld game console, or an online game console. In some embodiments system 600 is a mobile phone, smart phone, tablet computing device or mobile Internet device. Data processing system 600 can also include, couple with, or be integrated within a wearable device, such as a smart watch wearable device, smart eyewear device, augmented reality device, or virtual reality device. In some embodiments, data processing system 600 is a television or set top box device having one or more processors 602 and a graphical interface generated by one or more graphics processors 608.

In some embodiments, the one or more processors 602 each include one or more processor cores 607 to process instructions which, when executed, perform operations for system and user software. In some embodiments, each of the one or more processor cores 607 is configured to process a specific instruction set 609. In some embodiments, instruction set 609 may facilitate Complex Instruction Set Computing (CISC), Reduced Instruction Set Computing (RISC), or computing via a Very Long Instruction Word (VLIW). Multiple processor cores 607 may each process a different instruction set 609, which may include instructions to facilitate the emulation of other instruction sets. Processor core 607 may also include other processing devices, such a Digital Signal Processor (DSP).

In some embodiments, the processor 602 includes cache memory 604. Depending on the architecture, the processor 602 can have a single internal cache or multiple levels of internal cache. In some embodiments, the cache memory is shared among various components of the processor 602. In some embodiments, the processor 602 also uses an external cache (e.g., a Level-1 (LI) cache or Last Level Cache (LLC)) (not shown), which may be shared among processor cores 607 using known cache coherency techniques. A register file 606 is additionally included in processor 602 which may include different types of registers for storing different types of data (e.g., integer registers, floating point registers, status registers, and an instruction pointer register). Some registers may be general-purpose registers, while other registers may be specific to the design of the processor 602.

In some embodiments, one or more processor(s) 602 are coupled with one or more interface bus(es) 610 to transmit communication signals such as address, data, or control signals between processor 602 and other components in the system. The interface bus 610, in one embodiment, can be a processor bus, such as a version of the Direct Media Interface (DMI) bus. However, processor busses are not limited to the DMI bus, and may include one or more Peripheral Component Interconnect buses (e.g., PCI, PCI Express), memory busses, or other types of interface busses. In one embodiment the processor(s) 602 include an integrated memory controller 616 and a platform controller hub 610. The memory controller 616 facilitates communication between a memory device and other components of the system 600, while the platform controller hub (PCH) 610 provides connections to I/O devices via a local I/O bus.

Memory device 620 can be a dynamic random-access memory (DRAM) device, a static random-access memory (SRAM) device, flash memory device, phase-change memory device, or some other memory device having suitable performance to serve as process memory. In one embodiment the memory device 620 can operate as system memory for the system 600, to store data 622 and instructions 621 for use when the one or more processors 602 executes an application or process. Memory controller hub 616 also couples with an optional external graphics processor 612, which may communicate with the one or more graphics processors 608 in processors 602 to perform graphics and media operations. In some embodiments a display device 611 can connect to the processor(s) 602. The display device 611 can be one or more of an internal display device, as in a mobile electronic device or a laptop device or an external display device attached via a display interface (e.g., DisplayPort, etc.). In one embodiment the display device 611 can be a head mounted display (HMD) such as a stereoscopic display device for use in virtual reality (VR) applications or augmented reality (AR) applications.

In some embodiments the platform controller hub 610 enables peripherals to connect to memory device 620 and processor 602 via a high-speed I/O bus. The I/O peripherals include, but are not limited to, an audio controller 646, a network controller 614, a firmware interface 628, a wireless transceiver 626, touch sensors 625, a data storage device 624 (e.g., hard disk drive, flash memory, etc.). The data storage device 624 can connect via a storage interface (e.g., SATA) or via a peripheral bus, such as a Peripheral Component Interconnect bus (e.g., PCI, PCI Express). The touch sensors 625 can include touch screen sensors, pressure sensors, or fingerprint sensors. The wireless transceiver 626 can be a Wi-Fi transceiver, a Bluetooth transceiver, or a mobile network transceiver such as a 1G, 4G, or Long Term Evolution (LTE) transceiver. The firmware interface 628 enables communication with system firmware, and can be, for example, a unified extensible firmware interface (UEFI). The network controller 614 can enable a network connection to a wired network. In some embodiments, a high-performance network controller (not shown) couples with the interface bus 610. The audio controller 646, in one embodiment, is a multi-channel high definition audio controller. In one embodiment the system 600 includes an optional legacy I/O controller 640 for coupling legacy (e.g., Personal System 2 (PS/2)) devices to the system. The platform controller hub 610 can also connect to one or more Universal Serial Bus (USB) controllers 642 connect input devices, such as keyboard and mouse 641 combinations, a camera 644, or other USB input devices.

The following pertains to further examples.
Example 1 is an apparatus, comprising an input register comprising an input polynomial, a processing datapath communicatively coupled to the input register comprising a plurality of compute nodes to perform an incomplete number theoretic transform (NTT) algorithm on the input polynomial to generate an output polynomial in NTT format, the plurality of compute nodes comprising at least a first NTT circuit comprising a single butterfly circuit to perform a series of butterfly calculations on input data; and a randomizing circuitry to randomize an order of the series of butterfly calculations.
In Example 2, the subject matter of Example 1 can optionally include an arrangement wherein the processing datapath comprises a first set of seven compute nodes communicatively coupled in series and a second set of seven compute nodes communicatively coupled in series.
In Example 3, the subject matter of any one of Examples 1-2 can optionally include an arrangement wherein the input register is to store two coefficients from the input polynomial in a single memory word.
In Example 4, the subject matter of any one of Examples 1-1 can optionally include an arrangement wherein the first set of seven compute nodes operates on even coefficients and the second set of seven compute nodes operates on odd coefficients.
In Example 5, the subject matter of any one of Examples 1-4 can optionally include an arrangement wherein the first set of seven compute nodes and the second set of seven compute nodes perform iterations in parallel.
In Example 6, the subject matter of any one of Examples 1-5 can optionally include an arrangement wherein each compute node performs a pairwise multiplication on coefficients of the input polynomial.
In Example 7, the subject matter of any one of Examples 1-6 can optionally an output register to receive the output polynomial in NTT format.
Example 8 is a computer implemented method, comprising receiving, in an input register, an input polynomial, performing, in a processing datapath communicatively coupled to the input register comprising a plurality of compute nodes, an incomplete number theoretic transform (NTT) algorithm on the input polynomial to generate an output polynomial in NTT format, the NTT algorithm comprising performing, in a single butterfly circuit, a series of butterfly calculations on input data; and randomizing, in a randomizing circuitry, an order of the series of butterfly calculations.
In Example 9, the subject matter of Example 8 can optionally include an arrangement wherein the processing datapath comprises a first set of seven compute nodes communicatively coupled in series and a second set of seven compute nodes communicatively coupled in series.
In Example 10, the subject matter of any one of Examples 8-9 can optionally include an arrangement wherein the input register is to store two coefficients from the input polynomial in a single memory word.
In Example 11, the subject matter of any one of Examples 8-10 can optionally include an arrangement wherein the first set of seven compute nodes operates on even coefficients and the second set of seven compute nodes operates on odd coefficients.
In Example 12, the subject matter of any one of Examples 8-11 can optionally include an arrangement wherein the first set of seven compute nodes and the second set of seven compute nodes perform iterations in parallel.
In Example 13, the subject matter of any one of Examples 8-12 can optionally include an arrangement wherein each compute node performs a pairwise multiplication on coefficients of the input polynomial.
In Example 14, the subject matter of any one of Examples 8-13 can optionally include an output register to receive the output polynomial in NTT format.
Example 15 is an electronic device, comprising a processor, an input register comprising an input polynomial, a processing datapath communicatively coupled to the input register comprising a plurality of compute nodes to perform an incomplete number theoretic transform (NTT) algorithm on the input polynomial to generate an output polynomial in NTT format, the plurality of compute nodes comprising at least a first NTT circuit comprising a single butterfly circuit to perform a series of butterfly calculations on input data, and a randomizing circuitry to randomize an order of the series of butterfly calculations.
In Example 16, the subject matter of any Example 15 can optionally include an arrangement wherein the processing datapath comprises a first set of seven compute nodes communicatively coupled in series and a second set of seven compute nodes communicatively coupled in series.
In Example 17, the subject matter of any one of Examples 15-16 can optionally include an arrangement wherein the input register is to store two coefficients from the input polynomial in a single memory word.
In Example 18, the subject matter of any one of Examples 15-17 can optionally include an arrangement wherein the first set of seven compute nodes operates on even coefficients and the second set of seven compute nodes operates on odd coefficients.
In Example 19, the subject matter of any one of Examples 15-18 can optionally include an arrangement wherein the first set of seven compute nodes and the second set of seven compute nodes perform iterations in parallel.
In Example 20, the subject matter of any one of Examples 15-19 can optionally include an arrangement wherein each compute node performs a pairwise multiplication on coefficients of the input polynomial.
In Example 21, the subject matter of any one of Examples 15-20 can optionally include an output register to receive the output polynomial in NTT format.

The above Detailed Description includes references to the accompanying drawings, which form a part of the Detailed Description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

Publications, patents, and patent documents referred to in this document are incorporated by reference herein in their entirety, as though individually incorporated by reference. In the event of inconsistent usages between this document and those documents so incorporated by reference, the usage in the incorporated reference(s) are supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In addition "a set of' includes one or more elements. In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended; that is, a system, device, article, or process that includes elements in addition to those listed after such a term in a claim are still deemed to fall within the scope of that claim. Moreover, in the following claims, the terms "first," "second," "third," etc. are used merely as labels, and are not intended to suggest a numerical order for their objects.

The terms "logic instructions" as referred to herein relates to expressions which may be understood by one or more machines for performing one or more logical operations. For example, logic instructions may comprise instructions which are interpretable by a processor compiler for executing one or more operations on one or more data objects. However, this is merely an example of machine-readable instructions and examples are not limited in this respect.

The terms "computer readable medium" as referred to herein relates to media capable of maintaining expressions which are perceivable by one or more machines. For example, a computer readable medium may comprise one or more storage devices for storing computer readable instructions or data. Such storage devices may comprise storage media such as, for example, optical, magnetic or semiconductor storage media. However, this is merely an example of a computer readable medium and examples are not limited in this respect.

The term "logic" as referred to herein relates to structure for performing one or more logical operations. For example, logic may comprise circuitry which provides one or more output signals based upon one or more input signals. Such circuitry may comprise a finite state machine which receives a digital input and provides a digital output, or circuitry which provides one or more analog output signals in response to one or more analog input signals. Such circuitry may be provided in an application specific integrated circuit (ASIC) or field programmable gate array (FPGA). Also, logic may comprise machine-readable instructions stored in a memory in combination with processing circuitry to execute such machine-readable instructions. However, these are merely examples of structures which may provide logic and examples are not limited in this respect.

Some of the methods described herein may be embodied as logic instructions on a computer-readable medium. When executed on a processor, the logic instructions cause a processor to be programmed as a special-purpose machine that implements the described methods. The processor, when configured by the logic instructions to execute the methods described herein, constitutes structure for performing the described methods. Alternatively, the methods described herein may be reduced to logic on, e.g., a field programmable gate array (FPGA), an application specific integrated circuit (ASIC) or the like.

In the description and claims, the terms coupled and connected, along with their derivatives, may be used. In particular examples, connected may be used to indicate that two or more elements are in direct physical or electrical contact with each other. Coupled may mean that two or more elements are in direct physical or electrical contact. However, coupled may also mean that two or more elements may not be in direct contact with each other, but yet may still cooperate or interact with each other.

Reference in the specification to "one example" or "some examples" means that a particular feature, structure, or characteristic described in connection with the example is included in at least an implementation. The appearances of the phrase "in one example" in various places in the specification may or may not be all referring to the same example.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with each claim standing on its own as a separate embodiment. The scope of the embodiments disclosed herein is to be determined with reference to the appended claims, along with the full scope of equivalents to which such claims are entitled.

Although examples have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus, comprising:
an input register comprising an input polynomial;
a processing datapath communicatively coupled to the input register comprising a plurality of compute nodes to perform an incomplete number theoretic transform (NTT) algorithm on the input polynomial to generate an output polynomial in NTT format, the plurality of compute nodes comprising:
at least a first NTT circuit comprising a single butterfly circuit to perform a series of butterfly calculations on input data; and
a randomizing circuitry to randomize an order of the series of butterfly calculations.

2. The apparatus of claim 1, wherein the processing datapath comprises a first set of eight compute nodes communicatively coupled in series and a second set of seven compute nodes communicatively coupled in series.

3. The apparatus of any one of claims 1-2, wherein the input register is to store two coefficients from the input polynomial in a single memory word.

4. The apparatus of any one of claims 1-2, wherein the first set of seven compute nodes operates on even coefficients and the second set of seven compute nodes operates on odd coefficients.

5. The apparatus of any one of claims 1-4, wherein the first set of seven compute nodes and the second set of seven compute nodes perform iterations in parallel.

6. The apparatus of any one of claims 1-5, wherein each compute node performs a pairwise multiplication on coefficients of the input polynomial.

7. The apparatus of any one of claims 1-6, further comprising an output register to receive the output polynomial in NTT format.

8. A computer-implemented method, comprising:
receiving, in an input register, an input polynomial;
performing, in a processing datapath communicatively coupled to the input register comprising a plurality of compute nodes, an incomplete number theoretic transform (NTT) algorithm on the input polynomial to generate an output polynomial in NTT format, the NTT algorithm comprising:
performing, in a single butterfly circuit, a series of butterfly calculations on input data; and
randomizing, in a randomizing circuitry, an order of the series of butterfly calculations.

9. The method of claim 8, wherein the processing datapath comprises a first set of seven compute nodes communicatively coupled in series and a second set of seven compute nodes communicatively coupled in series.

10. The method of any one of claims 8-9, wherein the input register is to store two coefficients from the input polynomial in a single memory word.

11. The method of any one of claims 8-10, wherein the first set of seven compute operates on even coefficients and the second set of seven compute nodes operates on odd coefficients.

12. The method of any one of claims 8-11, wherein the first set of seven compute nodes and the second set of seven compute nodes perform iterations in parallel.

13. The method of any one of claims 8-12, wherein each compute node performs a pairwise multiplication on coefficients of the input polynomial.

14. The method of any one of claims 8-9, further comprising receiving, in an output register, the output polynomial in NTT format.
